# EUROPEAN PATENT APPLICATION

(11) **EP 0 872 400 A2**
(43) Date of publication of application: **21.10.1998**
(21) Application number: 98302650.1
(22) Date of filing: 03.04.1998
(51) Int. Cl.: B62B 9/14

(54) **Baby carriage hood**

(30) Priority: 17.04.1997 GB 9707630; 04.08.1997 GB 9716294
(71) Applicant: BRITAX-TEUTONIA KINDERWAGENFABRIK GmbH, D-32112 Hiddenhausen (DE)
(72) Inventor: Maxisch, Peter, 33106 Paderborn (DE)
(74) Representative: Hollinghurst, Antony

(57) **Abstract**

A baby carriage hood consists of a flexible cover mounted on a U-shaped frame member (28) which has each end secured to a respective side of the baby carriage body by a respective pivot joint (30, 32). Each pivot joint has a support member (40) secured to the baby carriage, a shaft (46) fast with the support member (40), and a bracket (50) secured to the U-shaped frame member (28). The bracket (50) is mounted on the shaft (46) and is movable radially relative to the shaft (46) so as to bring the locking means (54) on the bracket (50) into engagement with the complementary locking means (48) on the support member (40) to resist relative angular movement. A spring (56, 58) biases the locking means (48, 54) into engagement. The U-shaped frame member (28) is received in a fabric sleeve forming part of the cover. The width of the sleeve is sufficient to allow passage of said bracket (50) during removal from the frame member (28).

## Description

This invention relates to a baby carriage hood of the type comprising a flexible cover mounted on a U-shaped frame member which has each end adapted to be detachably secured to a respective side of a baby carriage body by a respective joint.

According to one aspect of the invention, wherein the flexible cover has a fabric sleeve for receiving the U-shaped frame member which is removable from the sleeve after disconnection of at least one of said joints.

A second aspect of the invention is particularly applicable to a baby carriage hood in which the joints securing the ends of the U-shaped frame member the baby carriage body are pivot joints, each of which comprises a support member adapted to be secured to the baby carriage, a shaft fast with the support member, a bracket secured to the U-shaped frame member and mounted on the shaft so that it is movable angularly thereon and having locking means adapted to engage with complementary locking means on the support member to inhibit relative angular movement.

US-A-4809724 discloses a baby carriage hood in which it is necessary first to move the frame member to its deployed position and then to tighten the locking member of each pivot joint separately. The frame is then positively locked in whatever position is required.

EP-A-0642968 discloses another baby carriage hood in which the bracket is coupled to the locking member for simultaneous angular movement so that angular movement of the bracket relative to the support member causes axial movement of the bracket relative to the support member to vary the friction between the clamping surfaces. Separate manual adjustment is necessary to vary the angular position in which the bracket becomes clamped.

According to the second aspect of the invention, the bracket is movable radially relative to the shaft so as to bring the locking means on the bracket into engagement with the complementary locking means on the support member to resist relative angular movement, spring means biasing the locking means into engagement. This provides a hood which can be deployed and clamped in a variety of alternative positions with a single hand movement.

An embodiment of the invention will now be described, by way of example, with reference to the accompanying drawings, in which:
Figure 1 is a perspective view of a pushchair fitted with a hood in accordance with the invention;
Figure 2 is a perspective view of the joint connecting the hood to the pushchair on the left hand side thereof (when viewed from behind);
Figure 3 is an exploded perspective view of the joint shown in Figure 2, facing outwardly from the pushchair;
Figure 4 is an exploded perspective view of the joint shown in Figure 2, facing inwardly towards the pushchair; and
Figure 5 is a sectional view of the hood, taken on the line 5 - 5 in Figure 1.

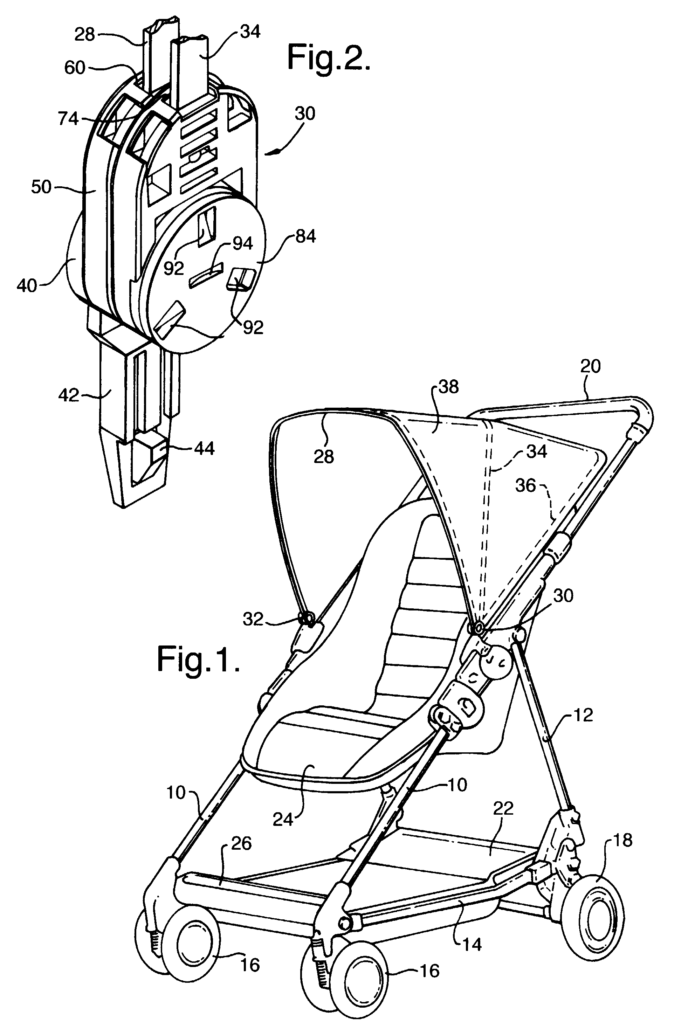

Referring first to Figure 1, a pushchair is formed from two interconnected side frames, each having a respective front frame member 10, a respective rear frame member 12 and a respective bottom frame member 14 joining the bottom ends of the front and rear frame members 10 and 12 and below which front and rear wheels 16 and 18 are mounted. The upper ends of the front and rear frame members 10 and 12 of each side frame are interconnected by respective limbs of a U-shaped handle 20. A luggage tray 22 is mounted between the two bottom frame members 14. The pivotal interconnection between the various frame members described above, and the manner in which they permit the pushchair to be folded, form no part of the present invention and will not be described further.

A seat 24 is mounted between the two side frames adjacent to the positions at which the tops of the frame members 10 and 12 are connected to the handle 20. A footrest 26 extends between the bottom ends of the front frame members 10 just above the level of the luggage tray 22.

A front U-shaped frame member 28 is pivotally mounted on the two limbs of the handle 20 by a pair of pivot joints 30 and 32. A U-shaped rear frame member 34 and a similar rear U-shaped frame member 36 is also mounted on the pivot joints 30 and 32. A hood 36 is supported on the frame members 28 and 34.

Referring to Figures 2 to 4, the pivot joint 30 on the left hand side of the pushchair has a support member 40 mounted on a spigot 42 which is engageable in a socket (not shown) on the pushchair handle 20 and retained in place by an integrally moulded spring catch 44. An integrally formed hub 46 projects from the outer face of the support member 40. The inner part of the cylindrical surface of the hub 46 carries gear teeth 48 while the outer part thereof is smooth.

A front support bracket 50 has a central opening 52 which is large enough to accommodate the hub 46. The lower part of the opening 52 is of semi-circular shape and has gear teeth 54 thereon dimensioned to engage with the gear teeth on the hub 46. The upper part of the opening 52 is rectangular and has a pair of integrally moulded leaf spring elements 56 and 58. The spring element 56 is positioned to engage with the teeth 48 on the upper part of the hub 46 so as to urge the teeth 54 into resilient engagement with the teeth 48. The spring element 58 engages with the upper surface or the spring element 56 to provide increased resilience. The bracket 50 also has a slot 60 in its upper surface, for receiving one end of the front frame member 28.

An intermediate support bracket 70 has a circular hole 72 therein dimensioned to be a sliding fit on the outer part of the hub 46. The intermediate bracket 70 has a slot 74 in its upper surface, for receiving one end of the rear U-shaped member 34.

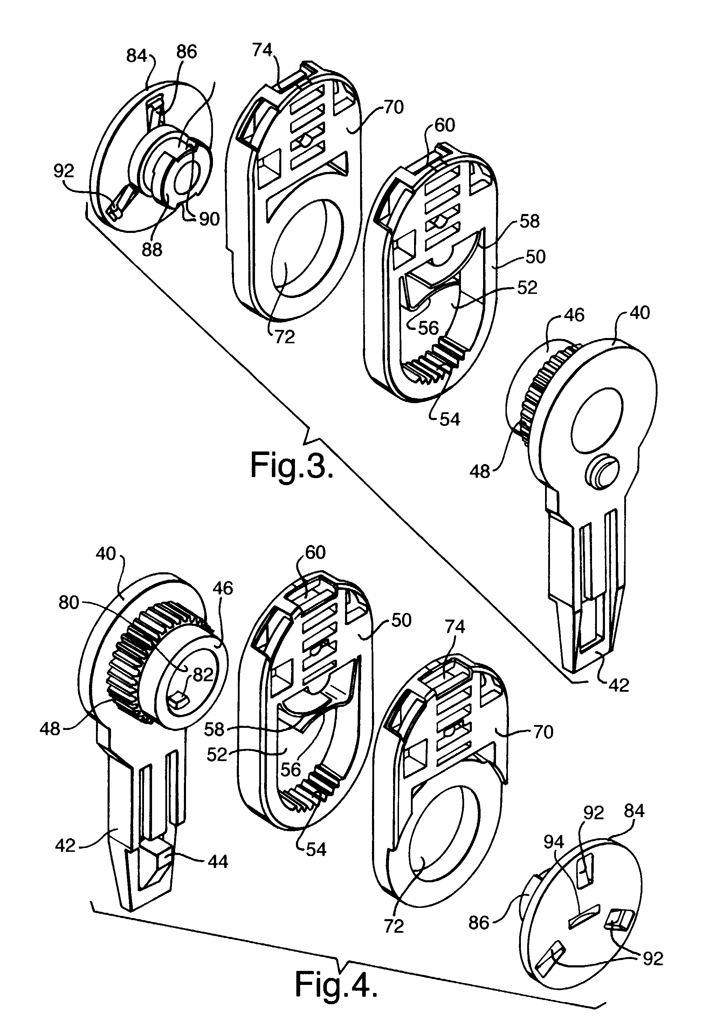

The hub 46 of the support member 40 has a central opening 80 with a pair of diametrically opposite projections 82 (only one of which is visible in Figure 4) on its cylindrical wall. An end cap 84 has a central stem 86 arranged to engage in the opening 80. The free end of the stem 86 carries a flange 88 (Figure 3) which has two diametrically opposite slots 90 to allow the projections 82 to pass the flange 88. Subsequent angular movement between the cap 84 and the support member 40 establishes a bayonet connection which retains the two brackets 50 and 70 on the hub 46.

The cap 84 also has three uniformly spaced slots accommodating integrally moulded leaf springs 92 which engage with the outer end face of the intermediate bracket 70 so as to provide a limited amount of friction resisting angular movement thereof. A central slot 94 enables the cap 84 to be removed using a coin.

When it is desired to move the hood 36 between its deployed and its folded position, the user presses downwards on the front frame member 28 to disengage the teeth 54 of both joints from the teeth 48 thereof against the action of the springs 56 and 58. The front frame member 28 can then be pivoted to the required position and released, whereupon the teeth 54 re-engage with the teeth 48. If force is applied to cause pivotal movement of the front frame member 28 without first pressing downwards, the teeth 54 will snap over the teeth 48 noisily but without causing damage.

Alternatively, the integrally moulded springs 56, 58 and 92 can be replaced by other types of spring.

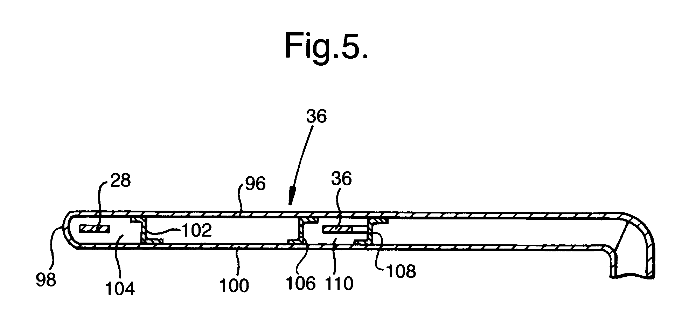

As can be seen from Figure 5, the hood 36 comprises an outer fabric layer 96 which is joined along its front edge 98 to an inner fabric layer 100. The two layers are interconnected by a first fabric web 102 which, with the front edge 98, forms a sleeve 104 in which the front U-shaped frame member 28 is accommodated. Two similar webs 106 and 108 together form a second sleeve 110 for accommodating the rear U-shaped frame member 36. The sleeve 104 is wide enough to allow passage of the front support bracket 50. Similarly, the sleeve 110 is wide enough to allow passage of the intermediate support bracket 70. Consequently, after the end cap 84 has been detached from the support member 40 and support brackets 50 and 70 separated therefrom, the two U-shaped frame members 28 and 36 can be threaded out of their respective sleeves 104 and 110. This allows the cover to be removed e.g. for washing.

## Claims

1. A baby carriage hood comprising a flexible cover (38) mounted on a U-shaped frame member (28) which has each end secured to a respective side of the baby carriage body by a respective pivot joint (30, 32), each pivot joint comprising a support member (40) adapted to be secured to the baby carriage, a shaft (46) fast with the support member (40), a bracket (50) secured to the U-shaped frame member (28) and mounted on the shaft (46) so that it is movable angularly and linearly thereon and having locking means (54) adapted to engage with complementary locking means (48) on the support member (40) to inhibit relative angular movement, characterised in that the bracket (50) is movable radially relative to the shaft (46) so as to bring the locking means (54) on the bracket (50) into engagement with the complementary locking means (48) on the support member (40) to resist relative angular movement, spring means (56, 58) biasing the locking means (48, 54) into engagement.

2. A baby carriage hood according to claim 1, wherein the shaft (46) projects through a hole (52) in the bracket (50), the locking means on the bracket (50) comprises detent means (54) on a concave surface of said hole (52), and the complementary locking means (48) on the support member comprises complementary detent means (48) on the shaft (46).

3. A baby carriage hood according to claim 2, wherein said detent means comprise gear teeth (48, 54).

4. A baby carriage hood according to claim 2 or 3, wherein the spring means comprises a leaf spring extending across said hole (52) opposite said concave surface so as to engage with the shaft (46).

5. A baby carriage hood according to claim 4, wherein a pair of leaf spring extend across said hole (52) at an angle to one another so as to form a V-shaped recess in which the shaft (46) is received.

6. A baby carriage hood according to any preceding claim, wherein the flexible cover (38) has a fabric sleeve (104) for receiving the U-shaped frame member (28) which is removable from the sleeve (104) after disconnection of at least one of said joints (30, 32).

7. A baby carriage hood according to claim 6, wherein the width of the fabric sleeve (104) is sufficient to allow passage of said bracket (50).

8. A baby carriage hood comprising a flexible cover (38) mounted on a U-shaped frame member (28) which has each end secured to a respective side of the baby carriage body by a respective pivot joint (30, 32), characterised in that the flexible cover (38) has a fabric sleeve (104) for receiving the U-shaped frame member (28) which is removable from the sleeve (104) after disconnection of at least one of said joints (30, 32).

9. A baby carriage hood according to claim 8, wherein each joint (30, 32) comprises a support member (40) adapted to be secured to the baby carriage and a bracket (50) secured to the U-shaped frame member (28) and detachably mounted on the support member (40), the width of the fabric sleeve (104) being sufficient to allow passage of said bracket (50).
